(19) **Europäisches Patentamt**

**European Patent Office**

**Office européen des brevets**

(11) Veröffentlichungsnummer: **0 073 797**
**B1**

(12) # EUROPÄISCHE PATENTSCHRIFT

(45) Veröffentlichungstag der Patentschrift:
**12.09.84**

(21) Anmeldenummer: **82900796.2**

(22) Anmeldetag: **12.03.82**

(86) Internationale Anmeldenummer:
**PCT/DE 82/00060**

(87) Internationale Veröffentlichungsnummer:
**WO 82/03267 (30.09.82** Gazette 82/23)

(51) Int. Cl.³: **F 24 J 3/04**, F 25 B 29/00,
G 05 D 23/19

(54) **VERFAHREN ZUM ERMITTELN EINES SOLLWERTES EINES TEMPERATUR- ODER DRUCKREGLERS EINER WÄRMEPUMPE.**

(30) Priorität: **14.03.81 DE 8107912 U**
**27.02.82 DE 8205716.U**

(43) Veröffentlichungstag der Anmeldung:
**16.03.83 Patentblatt 83/11**

(45) Bekanntmachung des Hinweises auf die Patenterteilung:
**12.09.84 Patentblatt 84/37**

(84) Benannte Vertragsstaaten:
**AT CH DE FR GB LI LU NL SE**

(56) Entgegenhaltungen:
**EP - A - 0 038 990**
**DE - A - 2 758 773**
**DE - A - 2 927 408**
**US - A - 3 979 710**

(73) Patentinhaber: **Joh. Vaillant GmbH u. Co, Berghauser Strasse 40 Postfach 10 10 20, D-5630 Remscheid 1 (DE)**
(84) Benannte Vertragsstaaten: **DE LU SE**

(73) Patentinhaber: **VAILLANT S.A.R.L, 4, Rue des Oliviers Orly-Sénia 326, F-94537 Rungis Cedex (FR)**
(84) Benannte Vertragsstaaten: **FR**

(73) Patentinhaber: **VAILLANT Ges.m.b.H, Forchheimergasse 7 Postfach 56, A-1233 Wien (AT)**
(84) Benannte Vertragsstaaten: **AT**

(73) Patentinhaber: **Vaillant Ltd., Vaillant Building, Aerodrome Way Heston Industrial Estate, GB-Hounslow, Middx. TW5 9QB (GB)**
(84) Benannte Vertragsstaaten: **GB**

(73) Patentinhaber: **SCHONEWELLE B.V., Ellermanstraat 17, NL-1099 BX Amsterdam (NL)**
(84) Benannte Vertragsstaaten: **NL**

(73) Patentinhaber: **Vaillant GmbH, Riedstrasse 8, CH-8953 Dietikon 1 (CH)**
(84) Benannte Vertragsstaaten: **CH LI**

(72) Erfinder: **KANTNER, Alexander, Paul-Windgassen-Strasse 99, D-5630 Remscheid 11 (DE)**

(74) Vertreter: **Heim, Johann-Ludwig, c/o Joh. Vaillant GmbH u. Co Postfach 10 10 20 Berghauser Strasse 40, D-5630 Remscheid 1 (DE)**

# Beschreibung

Die vorliegende Erfindung bezieht sich auf Verfahren zum Ermitteln des Sollwertes gemäss dem 1. Teil der Patentansprüche 1 und 4.

Druck- und Temperaturregler können unter anderem bei Sorptionswärmepumpen, insbesondere Absorptionswärmepumpen, eingesetzt werden, um den Druck beziehungsweise die Temperatur im Hochdruckteil der Sorptionswärmepumpe konstant zu halten oder auf vorgebbare Sollwerte zu führen. Unter Hochdruckteil ist hierbei der Bereich des Austreibers zu verstehen, der im Zuge des Kältemittelweges bis zum Expansionsventil und im Zuge des Weges der armen Lösung gleichfalls bis zum Expansionsventil reicht.

Da Absorptionswärmepumpen in die unterschiedlichsten Gebiete geliefert und dort aufgestellt werden, ist es relativ schwierig, die Sollwertgeber solcher Druck- und Temperaturregler voreinzustellen.

Es hat sich jedoch herausgestellt, dass man hierzu die sogenannten Klimazonen benutzen kann, in die mindestens das Gebiet der Bundesrepublik Deutschland eingeteilt ist. Hier ergeben sich Bereiche, denen jeweils tiefste zu erwartende Aussentemperaturen zugeordnet sind.

Aus der DE-A Nr. 2758773 ist eine bivalente Heizungsanlage mit einer direkt befeuerten Absorptionswärmepumpe bekanntgeworden, deren Kältemittelkreislauf über Wärmetauscher mit einem Heizmittelkreislauf zur Raumheizung gekoppelt ist. Bei einem vorbestimmten Wert der Raumtemperatur wird die Brennstoffzufuhr zum Brenner durch Steuermittel erhöht, weiterhin wird der Kältemittelkreislauf vom Wärmepumpenbetrieb auf einen reinen Wärmetauscherbetrieb umgeschaltet. Die Grenze liegt bei −3° C.

Durch die DE-A Nr. 2927408 ist eine bivalente Heizungsanlage einer direkt befeuerten Absorptionswärmepumpe und einem Gas- oder Ölkessel bekanntgeworden, bei der ein erster an den Heizmittelkreislauf thermisch angekoppelter temperaturabhängiger Schalter mit mehreren, auf unterschiedliche Vorlauftemperaturen fest eingestellten Kontaktbahnen und ein zweiter, der Aussenatmosphäre ausgesetzter weiterer temperaturabhängiger Schalter vorgesehen ist, der mehreren unterschiedlichen Aussentemperaturbereichen fest zugeordnete, der Ansteuerung der Kontaktbahnen des ersten Schalters dienenden Schaltstellungen aufweist. Hierbei wird beim Unterschreiten einer Aussentemperatur von weniger als −5° C vom normalen Wärmepumpenbetrieb auf Direktheizbetrieb umgeschaltet, wozu der Kältemittelkreislauf unterbrochen und das Magnetventil der Zusatzheizung betätigt wird. Schliesslich ist durch die EP-A Nr. 38990, welche teilweise unter Art. 54 (3) EPÜ fällt, ein Regelverfahren für eine Absorptionsheizanlage mit einer Wärmepumpe bekanntgeworden, bei der die Anpassung der jeweiligen Istan die Sollheizleistung ausschliesslich durch Veränderung der Lösungsmitteltemperatur im Austreiber vorgenommen wird. Hierbei wird eine zeitlich konstante Lösungsmittelmenge durch die Lösungsmittelpumpe umgewälzt und es wird dem Lösungsmittel keine zusätzliche Wärme zugeführt, solange der Istwert der Heizleistung der Heizanlage grösser oder gleich dem Sollwert ist. Die Lösungsmitteltemperatur wird erst dann erhöht, wenn der Istwert kleiner als der Sollwert wird.

Durch die US-A Nr. 3979719 ist eine Regelschaltung für eine Heizungsanlage bekanntgeworden, mit der eine von der Aussentemperatur abhängige Heizkurve für den Regler vorgegeben werden kann.

Der vorliegenden Erfindung liegt mithin die Aufgabe zugrunde, für Sollwertgeber von Temperatur- oder Druckreglern von Sorptionswärmepumpen Voreinstellmöglichkeiten zu geben, die anschliessend nur noch von den täglichen Betriebsbedingungen überlagert werden.

Zur Lösung dieser Aufgabe besteht die Erfindung in den kennzeichnenden Merkmalen der nebengeordneten Ansprüche 1 und 4.

Weitere Ausgestaltungen und besonders vorteilhafte Weiterbildungen der Erfindung ergeben sich aus den abhängigen Ansprüchen und der nachfolgenden Beschreibung, die anhand der Figuren der Zeichnungen ein Ausführungsbeispiel der Erfindung näher erläutert.

Es zeigen

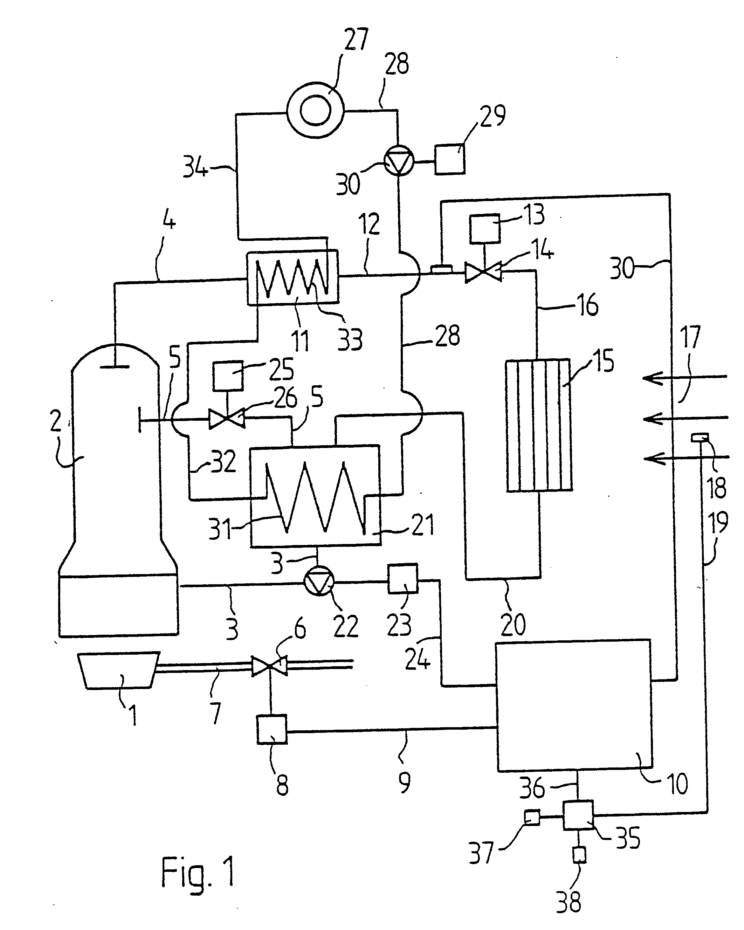

Fig. 1 eine schematische Darstellung der Schaltung einer Absorptionswärmepumpe,

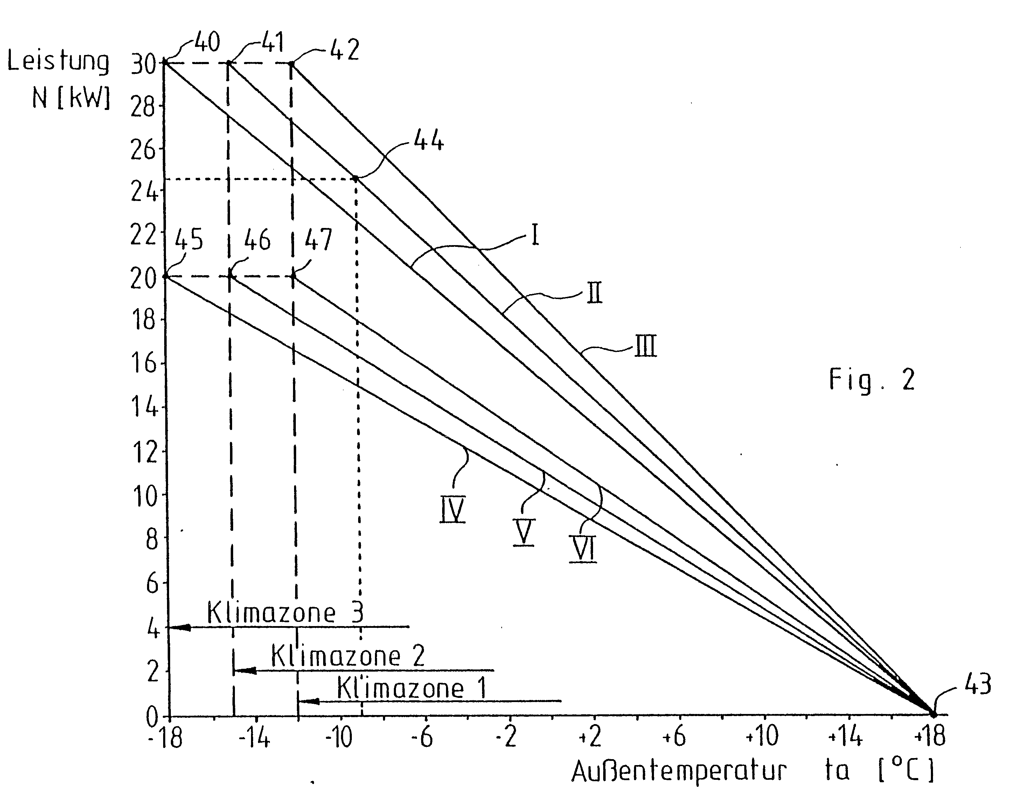

die weiteren Fig. 2 bis 6 Diagramme.

In allen Figuren bedeuten gleiche Bezugszeichen jeweils die gleichen Einzelheiten.

Eine auf der Basis Ammoniak/Wasser arbeitende Absorptionswärmepumpe gemäss Fig. 1 weist einen von einem Brenner 1 beheizten Austreiber 2 auf, in den eine Leitung 3 für reiche Lösung mündet und von dem Leitungen 4 für Kältemitteldampf und 5 für arme Lösung abgehen.

Bei dem Brenner handelt es sich um einen Gas- oder Ölbrenner, der über eine mit einem Brennstoffventil 6 versehene Brennstoffzufuhrleitung 7 gespeist ist, wobei das Ventil 6 von einem Stellglied 8 beherrscht ist, das über eine Stelleitung 9 von einem Regler 10 beaufschlagt wird.

An die Leitung 4 für Kältemitteldampf ist ein Kondensator 11 angeschlossen, die Leitung 4 setzt sich als Kondensatleitung 12 zu einem mit einem Stellglied 13 versehenen Expansionsventil 14 fort, an das sich eine zu einem Verdampfer 15 führende Kältemittelleitung 16 anschliesst.

Der Verdampfer ist von einer Umweltenergiequelle, wie Aussenluft oder Grundwasser 17, gespeist, deren Temperatur von einem Temperaturfühler 18 abgefühlt werden kann, der über eine Messleitung 19 mit dem Regler 10 verbunden ist.

Vom Verdampfer 15 führt eine Kältemitteldampfleitung 20 zu einem Absorber 21, von dem die Leitung 3 abgeht, die zurück zum Austreiber unter Zwischenschaltung einer Lösungsmittelpumpe 22 führt, die über ein Stellglied 23 beaufschlagbar ist, das mit dem Regler 10 über eine Stelleitung 24 verbunden ist.

Die Leitung 5 für arme Lösung führt unter Zwischenschaltung eines von einem Stellglied 25 beherrschten Expansionsventils 26 in den Absorber 21.

Die Sorptionswärmepumpe beheizt einen Verbraucher 27, der eine Sammelheizungsanlage aus Konvektoren oder Radiatoren, aber auch eine Fussbodenheizungsanlage und/oder einen Gebrauchswasserbereiter darstellt. Dieser Verbraucher kann direkt von der Wärmepumpe beheizt werden oder unter Zwischenschaltung eines Drei- oder Vier-Wege-Mischventils. In eine Rücklaufleitung 28 des Verbrauchers ist eine von einem Stellglied 29 beherrschte Heizungswälzpumpe 30 eingefügt, die Leitung 28 führt zu einer Wärmetauscherrohrschlange 31, die im Inneren des Absorbers 21 untergebracht ist. Von der Rohrschlange 31 führt eine Leitung 32 zu einer weiteren Wärmetauscherrohrschlange 33, die im Inneren des Kondensators 11 untergebracht ist. An die Rohrschlange 33 ist die Verbrauchervorlaufleitung 34 angeschlossen.

Bei den Stellgliedern 8, 25 und 13 handelt es sich um Magnetantriebe, deren Stellgrösse (Hub) direkt proportional dem Strom ist, mit dem sie vom Regler 10 beaufschlagt sind. Bei den Stellgliedern 29 und 23 kann es sich um Regeltransformatoren in Verbindung mit den Pumpenmotoren handeln, so dass die Pumpendrehzahl direkt proportional der Stellgrösse aus dem Regler 10 ist. Man könnte auch die Pumpen mit konstanter Drehzahl antreiben und die Regelfunktion derart verwirklichen, dass man vom Pumpeneingang zum Pumpenausgang ein Bypass-Ventil legt, dessen Öffnungsquerschnitt von der Stellgrösse des Reglers 10 beaufschlagt wird. Schliesslich wäre es auch denkbar, Pumpen mit regelbarem Durchsatz vorzusehen und so den Förderstrom pro Hub oder pro Umdrehung zu variieren und den elektrischen Antrieb konstant zu lassen.

Dem Regler 10 ist ein Sollwertgeber 35 über eine Leitung 36 aufgeschaltet.

An diesem Sollwertgeber 35 sind folgende Sollwerteinstellungen möglich: Ein Sollwerteinsteller 37 gestattet es, die maximale Leistung der Wärmepumpe, die auf den Verbraucher 27 gegeben werden kann, einer bestimmten Aussentemperatur zuzuordnen. So ist zum Beispiel das Gebiet der Bundesrepublik Deutschland in drei Klimazonen eingeteilt, wobei die tiefste zu erwartende Aussentemperatur von −12° C gemäss DIN 4701 der Klimazone 1, die Aussentemperatur von −15° C der Klimazone 2 und die Aussentemperatur von −18° C der Klimazone 3 zugeordnet ist. Somit kann man dem Sollwerteinsteller 37 gemäss der Klimazone, in der die Wärmepumpe beziehungsweise deren Regler zur Aufstellung kommen soll, die zugehörige festgelegte Leistung der Wärmepumpe, seien es 10, 20, 30 oder 50 kW, der jeweiligen Klimazone zuordnen. Beträgt im angenommenen Beispiel die Maximalleistung der einzustellenden Wärmepumpe 30 kW und soll sie in einem Ort der Klimazone 2 aufgestellt werden, so wird über den Sollwertsteller 37 der Regler so justiert, dass die Leistung von 30 kW bei −15° C anfällt.

Sollte dieselbe Wärmepumpe mit dem gleichen Regler dagegen in der Klimazone 3 zur Aufstellung kommen, so würde der Sollwertsteller 37 so eingestellt werden, dass die 30 kW bei einer Aussentemperatur von −18° C abgegeben würden. Somit ergibt sich generell, dass zwischen einer Aussentemperatur, bei der überhaupt nicht mehr geheizt wird, beispielsweise 18° C, und der tiefsten möglichen Aussentemperatur der jeweiligen Klimazone Leistungen zwischen null und der Maximalleistung der Wärmepumpe zur Anwendung kommen.

Wie die Einstellung sich im einzelnen auswirkt, geht aus dem Diagramm der Fig. 2 hervor: In der Abszisse sind die tiefsten zu erwartenden Temperaturen der jeweiligen Klimazonen bis zu einer Temperatur, bei der nicht mehr geheizt wird, aufgezeichnet. In der Ordinate sind die Maximalleistungen der jeweiligen Wärmepumpen aufgetragen. Unter Maximalleistung ist die Wärmeleistung zu verstehen, die maximal an die Verbraucher 27 abgegeben werden kann. Die Einstellung wird nun so vorgenommen, dass, zum Beispiel bei einer Wärmepumpe mit 30 kW Maximalleistung, je nach Austellungsort der Klimazone diese 30 kW entweder bei −18° C gemäss Klimazone 3 oder bei −15° C entsprechend einem Aufstellungsort in Klimazone 2 oder bei −12° C entsprechend einem Aufstellungsort in einem Ort der Klimazone 1 abgeschieden werden. Die entstehenden Punkte 40, 41 beziehungsweise 42 werden mit dem Punkt auf der Abszisse 43 verbunden, bei dessen Überschreiten eine Beheizung der Wohnräume mit der Wärmepumpe nicht mehr notwendig ist. Als Verbindung der Punkte 40, 41 und 42 einerseits und des Punktes 43 andererseits ergeben sich Geraden mit der Bezeichnung I, II und III entsprechend den jeweiligen Klimazonen. Somit lässt sich also beispielsweise einer Aussentemperatur von −9° C bei einem Aufstellungsort in Klimazone 2 eine Istleistung der Wärmepumpe von 24,5 kW zuordnen, gemäss dem Punkt 44.

Die weiteren drei Kurven IV, V und VI aus der Fig. 2 ergeben sich dann, wenn eine Wärmepumpe von 20 kW Maximalleistung vorgegeben ist und diese Maximalleistung gemäss den Punkten 45, 46 und 47 den jeweils tiefsten in den Klimazonen 1, 2 und 3 zu erwartenden Aussentemperaturen von −18, −15 und −12° C zugeordnet werden und die Punkte mit dem Punkt 43 durch Geraden verbunden werden.

Es ist so zum Beispiel möglich, im Typenprogramm eines Herstellers drei Wärmepumpen vorzusehen, von denen die erste eine Maximalleistung von 10 kW, die zweite eine solche von 20 kW und die dritte eine von 30 kW aufweist. Je nach der Wärmedämmung und der sonstigen Gegebenheiten des zu beheizenden Wohngebäudes wird zunächst festgelegt, welcher der Wärmepumpentypen zur Anwendung kommt, und zwar im Hinblick auf die von ihm erzeugbare maximale Wärmeleistung. Dann wird der Aufstellungsort dieser Wärmepumpe in Betracht gezogen und durch eine Vorjustierung des Sollwertgebers der Regler so programmiert, dass die maximale Leistung der ausgewählten Wärmepumpe bei der tiefsten der Klimazone des Aufstellungsorts entsprechenden Aussentemperatur anfällt. Aus diesen beiden Überlegungen resultiert dann eine der Kurven I bis III, je nach verwendeter Wärmepumpe. Damit liegt fest, wie die Augenblicksleistung der Wärmepumpe als Sollwert dem Regler vorgegeben ist, und zwar lediglich noch nach Massgabe der gerade herrschenden Aussentemperatur.

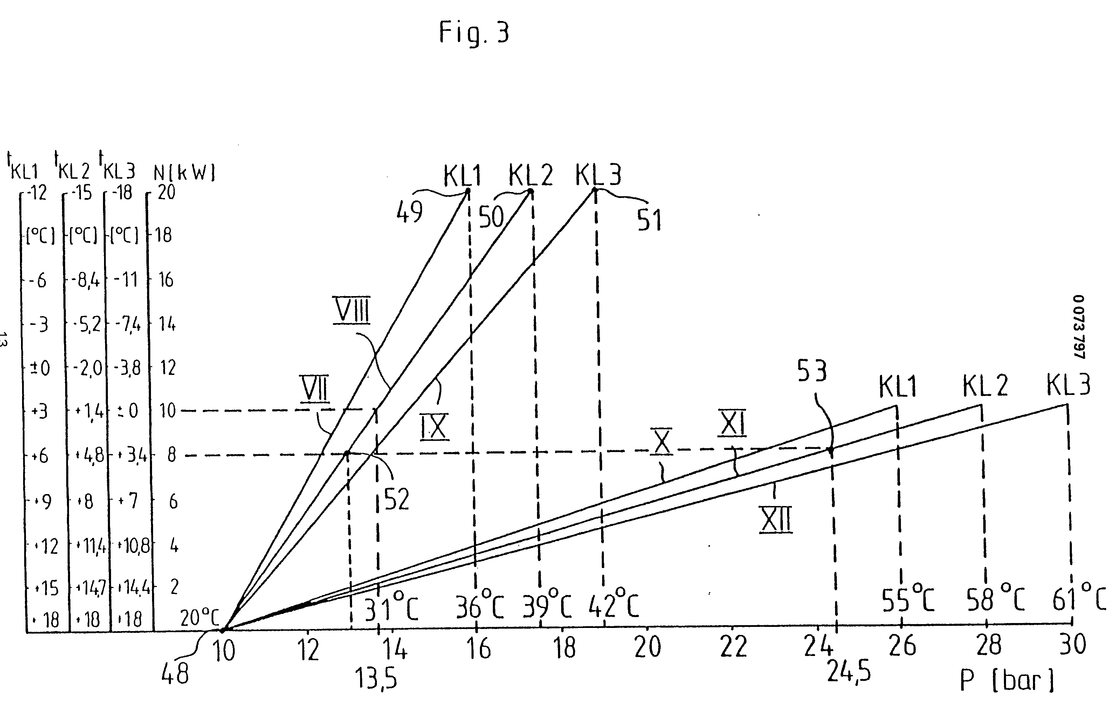

Die weitere Vorgehensweise wird anhand der Fig. 3 näher beschrieben. In der Fig. 3 ist in der Abszisse der Kondensatordruck beziehungsweise, allgemeiner formuliert, der Druck im Hochdruckteil der Wärmepumpe – das ist in Fig. 1 die Kältemitteldampfstrecke vom Austreiber bis zum Expansionsventil beziehungsweise die Strecke der armen Lösung vom Austreiber bis zum Expansionsventil – zusammen mit der Vorlauftemperatur des Verbrauchers aufgetragen. Hierbei ist der Nullpunkt gesetzt bei einem Kondensatordruck von 10 bar, was einer Raumtemperatur und einer Vorlauftemperatur von 20° C entspricht. Dies ist durch den Punkt 48 definiert.

In der Ordinate sind die Temperaturen in den Klimazonen I, II und III aufgezeichnet, die im Nullpunkt mit +18° C beginnen und ihren Maximalpunkt mit den Endtemperaturen der Klimazonen, das sind −12, −15 beziehungsweise −18° C, erreichen. Als vierter Massstab der Ordinate ist die Leistung der Wärmepumper jeweils in kW aufgetragen. Hierbei sind dem Nullpunkt 48, entsprechend einer Aussentemperatur von 18° C, einer Leistung von 0 kW zugeordnet, steigend bis zur Nennleistung der Wärmepumpe, hier 20 kW, entsprechend dem tiefsten zu erwartenden Temperaturpunkt der jeweiligen Klimazone.

Bei den Kurven VII, VIII, IX ist als Parameter eine Niedertemperatur-Heizungsanlage in monovalenter Betriebsweise für die Wärmepumpe zugrunde gelegt, beispielsweise eine Fussbodenheizung. Die Punkte 49, 50 und 51 ergeben sich, indem Vorlauftemperaturen von 36, 39 und 42° C ausgewählt werden, die den geweiligen Aussentemperaturen der Klimazone zugeordnet sind. Bei der Dimensionierung der Heizungsanlage, also des Verbrauchers, anhand der Wärmebedarfsberechnung lässt sich ermitteln, wie hoch die Vorlauftemperatur sein muss, um bei gegebenem Gebäude und gegebener Heizungsanlage bei der Endtemperatur der jeweiligen Klimazone eine den Wünschen des Verbrauchers entsprechende Beheizung des Gebäudes sicherzustellen. Die Kurven VII, VIII und IX ergeben sich dann somit durch eine Verbindung jeweils eines der Punkte 49 bis 51 mit dem Nullpunkt 48. Wird nun eine solche Kurve vom Regler 10 abgefahren, so ergibt sich automatisch aus dem Massstab der Abszisse bei vorgegebener jeweiliger gemessener Aussentemperatur durch die Lage der Kurven ein bestimmter Kondensatordruck, der als Sollwert dem Regler vorgegeben wird.

Zum Beispiel mag dienen, dass die Wärmepumpe wiederum 20 kW aufweist und die Wärmepumpe in einem Ort der Klimazone 2 zur Aufstellung kommt. Somit ergäbe sich aufgrund der Wärmebedarfsberechnung und dem Aufstellungsort und der Nennleistung der Wärmepumpe beispielsweise die Kurve VIII. Herrscht nun eine aktuelle Aussentemperatur von +4,8° C, so ergibt sich auf der Kurve VIII der Punkt 52, dem ein Kondensatordruck von 13 bar zugeordnet ist, was gleichzeitig einer Vorlauftemperatur von 30° C entspricht. Solange sich demgemäss die Aussentemperatur nicht ändert, bewirkt der Regler eine Vorlauftemperaturregelung für den Sollwert von 30° C. Fällt oder steigt die Aussentemperatur, so gilt als Reglersollwert-Kennlinie die Kurve VIII, das heisst, der Sollwert für die konstante zu regelnde Temperatur ändert sich nach Massgabe der Kennlinie VIII. Fällt beispielsweise die Aussentemperatur von 4,8 auf 1,4° C, so gilt als neuer Kondensatordruck-Sollwert 13,5 bar beziehungsweise eine Vorlauftemperatur von 31° C. Die zweite Kurvenschar X, XI und XII ergibt sich, wenn als Parameter ein Hochtemperatur-Heizungssystem zugrunde gelegt wird, beispielsweise eine Radiatorheizung mit einer Vorlauftemperatur von 90° C und einer Rücklauftemperatur von 70° C bei Maximalleistung. Es ist erkennbar, dass beispielsweise bei einer Wärmepumpen-Maximalleistung von 20 kW bei einem Aufstellungsort in Klimazone 2 der vorhin gewählten Aussen-Isttemperatur von 4,8° C nunmehr als Punkt 53 ein Kondensator-Solldruck von 24,5 bar zugehörig ist. Das entspricht weiterhin einer Sollvorlauftemperatur von nahezu 53° C.

Bei weiter fallender Aussentemperatur bewegt sich demgemäss der Punkt 53 auf der Kurve XI weiter in Richtung der Maximalleistung, wobei diese bei einem Kondensationsdruck von 28 bar und einer Vorlauftemperatur von 58° C erreicht ist. Fällt die Aussentemperatur weiter, muss anschliessend auf eine Alternativheizung umgeschaltet werden.

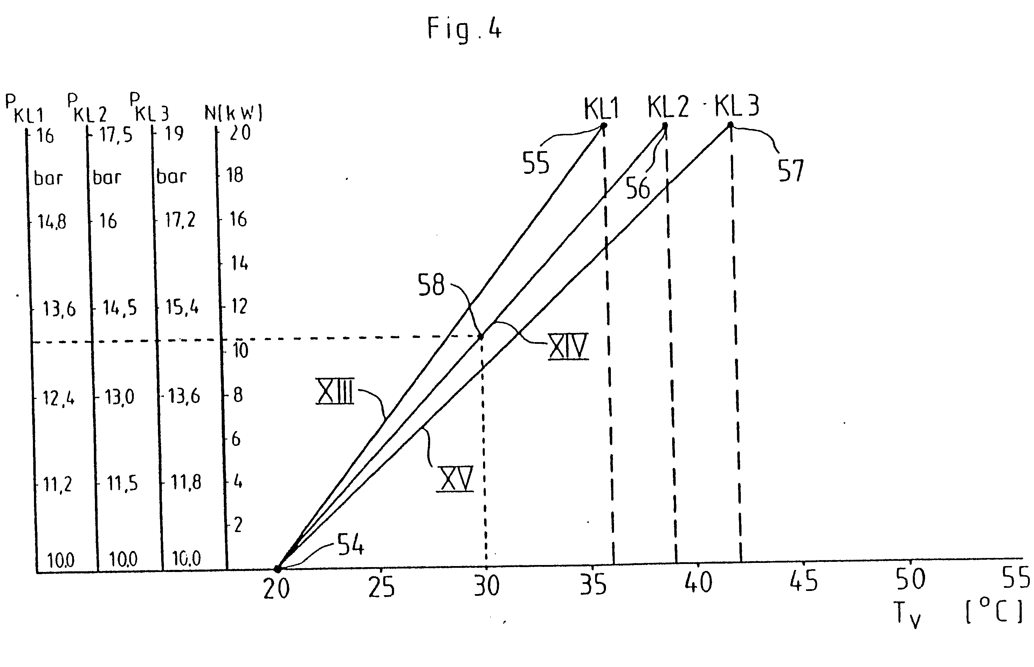

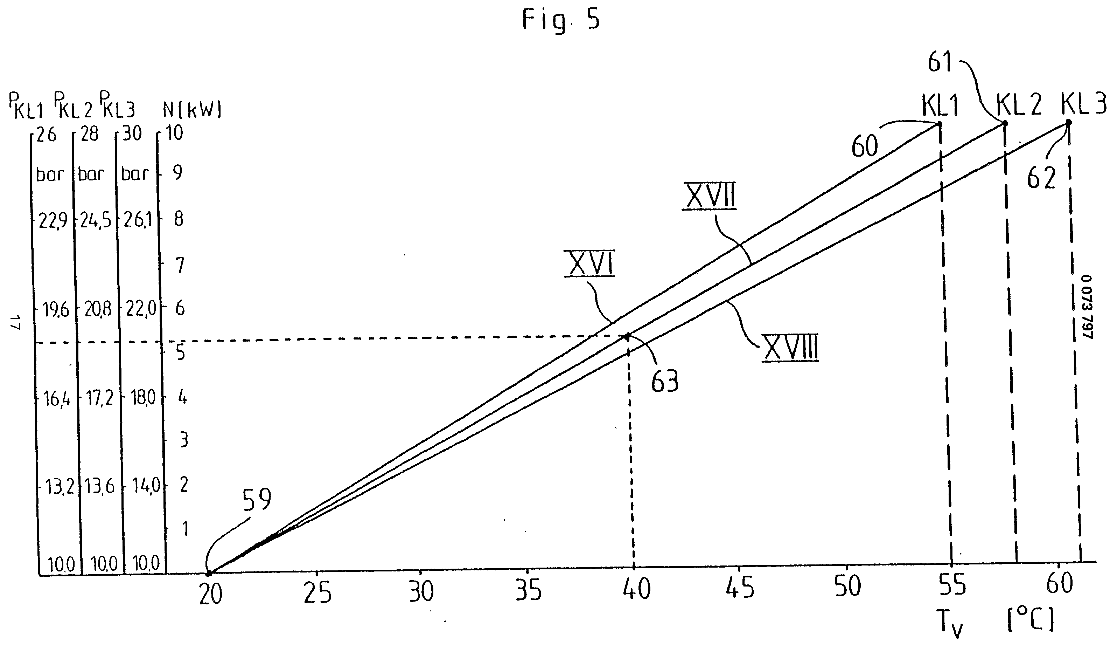

Weitere Variationsmöglichkeiten bezüglich der als Verbraucher anzusehenden Heizungsanlage zeigen die Fig. 4 und 5. So ist bei der Fig. 4 als Abszisse die Vorlauftemperatur einer Niedertemperatur-Heizungsanlage bei monovalentem Betrieb aufgetragen, in der Ordinate zunächst die Leistung in kW der ausgewählten Wärmepumpe, hier wiederum 20 kW Maximalleistung. Den einzelnen Klimazonen 1, 2 und 3 werden hierbei Maximaldrücke von 16, 17,5 und 19 bar zugeordnet, die jeweils bei einer Leistung von 20 kW als maximaler Solldruck entstehen und die erreicht werden bei den tiefsten jeweiligen Temperaturen der bezeichneten Klimazonen. Als Nullpunkt 54 der in Fig. 4 dargestellten Kurvenschar ist eine Vorlauftemperatur von 20° C, entsprechend einer gewünschten Raumtemperatur von 20° C, vorgesehen, was einem Druck von jeweils 10 bar, unabhängig von dem Aufstellungsort und der Klimazone der Wärmepumpe, zugeordnet ist. Somit ergibt sich eine Zuordnung des Drucksollwertes zur Warmepumpenleistung und gleichermassen eine Zuordnung beider Grössen zur Vorlauftemperatur.

Diese Zuordnung ergibt sich als Kurven XIII bis XV, wobei sich die Spitzenwerte 55, 56 und 57 der Kurven XIII bis XV dadurch ergeben, dass die Maximalleistung der Wärmepumpe dem Maximaldruck und diese wiederum je nach zur Anwendung kommender Klimazone einer aus der Wärmebedarfsberechnung ermittelten maximalen Vorlauftemperatur der Heizungsanlagen zugeordnet werden. Als Beispiel möge dienen, dass wiederum eine Wärmepumpe mit einer Nennleistung von 20 kW einem Aufstellungsort in Klimazone 2 zugeordnet werden würde. Als Beispiel möge aufgrund der Aussentemperatur eine Vorlauftemperatur von 30° C erforderlich sein, die zu einem Punkt 58 auf der Kurve 14 führt. Diesem Punkt ist in der Ordinate ein Drucksollwert von 14 bar zugeordnet beziehungsweise eine Wärmepumpenleistung von 10,5 kW.

Bei der Fig. 5 besteht der Parameter darin, dass als Heizungsanlage eine Hochtemperatur-Radiatoranlage verwendet wird, die bei Maximallast eine Vorlauftemperatur von 90° C und eine Rücklauftemperatur von 70° C aufweist. Die Speisung erfolgt bivalent, das heisst bis zu einer bestimmten Grenzaussentemperatur über die Wärmepumpe, bei Unterschreiten dieser Grenztemperatur durch den eingangs bereits erwähnten reinen Kesselbetrieb der Wärmepumpe. In der Abszisse ist die Vorlauftemperatur TV in ° C aufgetragen, in der Ordinate analog zur Darstellung gemäss Fig. 4 die Nennleistung der Wärmepumpe und dieser zugeordnete Maximaldrücke im Kondensator beziehungsweise im Hochdruckteil der Wärmepumpe, entsprechend dem Aufstellungsort der jeweiligen Klimazone. Bei diesem Ausführungsbeispiel ist aufgrund der bivalenten Betriebsweise die Leistung der Wärmepumpe mit 10 kW begrenzt, je nach Klimazone entspricht dies maximalen Kondensator-Solldrücken von 26 bar in Klimazone 1, 28 bar in Klimazone 2 und 30 bar in Klimazone 3. Der Nullpunkt 59 ist dadurch erreicht, dass bei einer Vorlauftemperatur der Heizungsanlage von 20° C eine Leistung der Wärmepumpe von 0 kW erzielt wird, bei einem Kondensatordruck von 10 bar. Die Maximalpunkte 60, 61 und 62 der Kurven XVI bis XVIII ergeben sich dadurch, dass bestimmte maximale Vorlauftemperaturen von 55, 58 und 61° C der Maximalleistung der Wärmepumpe von 10 kW beziehungsweise dem maximalen Drucksollwert zugeordnet werden. Die Kurven selbst stellen wieder die Verbindung eines der Punkte 60 bis 62 mit dem Nullpunkt 59 dar.

Als Beispiel wird angenommen, dass bei einer Wärmepumpenleistung von 10 kW aufgrund der aktuellen Aussentemperatur eine Vorlauftemperatur von 40° C bei einem Aufstellungsort der Wärmepumpe im Bereich der Klimazone 2 vorliegt. Das führt zu einem Punkt 63, dem Ordinatenwerte von 5,3 kW beziehungsweise ein Kondensator-Solldruck von rund 19 bar zugeordnet sind.

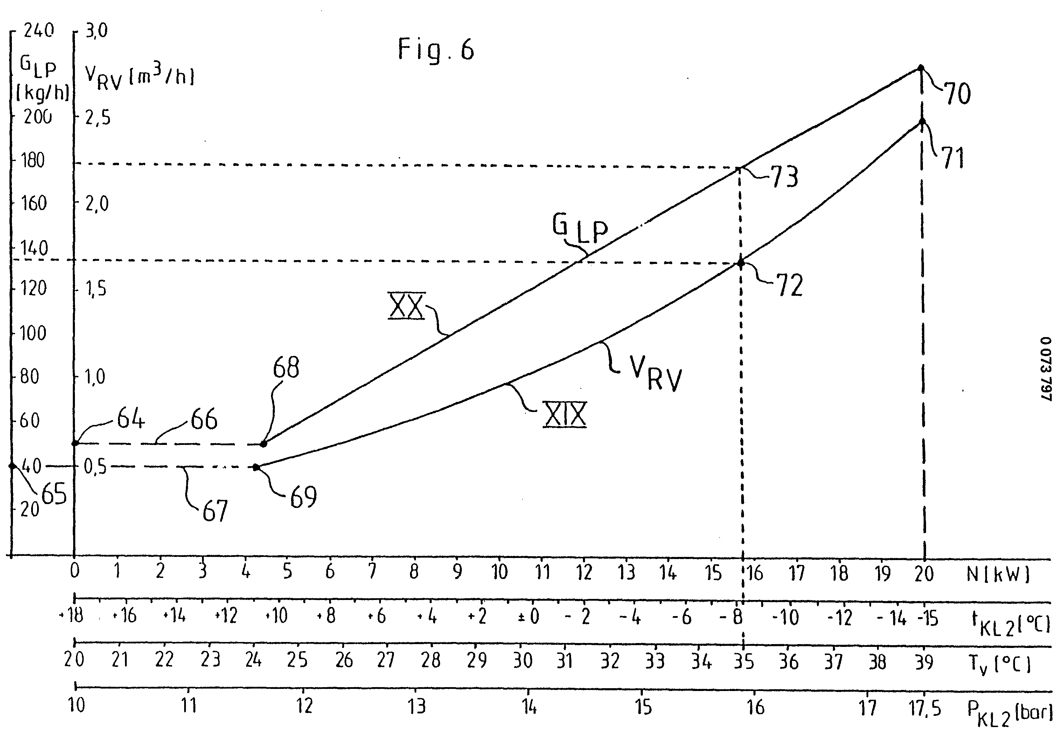

Nunmehr, nachdem aufgrund des Typs der Wärmepumpe, unterschieden nach der jeweiligen Endleistung der Type, die Wärmepumpe ausgewählt wurde und ihre Maximalleistung gemäss der Klimazone der tiefsten am Aufstellungsort zu erwartenden Aussentemperatur zugeordnet wurde und der Kondensator-Solldruck feststeht, ist es nur noch erforderlich, eine dem Kondensator-Solldruck entsprechende Stellung des Gasmagnetregelventils 6 beziehungsweise der Drehzahl des Antriebsmotors 23 für die Lösungsmittelpumpe 22 zuzuordnen. Zur Verdeutlichung dieser Zuordnung ist die Fig. 6 vorgesehen. Als Abszisse ist in der Fig. 6 die Leistung der Wärmepumpe bis zu einer Maximalleistung von 20 kW aufgetragen, dieser Leistung sind als weitere Massstäbe zugeordnet die Temperaturskala in der Klimazone 2, die Vorlauftemperatur TV bei Verwendung an einer Fussbodenheizung und der Kondensatordruck P. Diesem Ausführungsbeispiel liegt somit eine Wärmepumpe mit einer Maximalleistung von 20 kW und einem Aufstellungsort in der Klimazone 2 zugrunde. Als Ordinate ist aufgetragen der Durchsatz an reicher Lösung GLP in kg/h und der Gasdruchsatz zum Brenner VRV in m³/h. Für den Gasdurchsatz ergibt sich die Kurve XIX, für den Lösungsmitteldurchsatz die Kurve XX. Beide Kurven weisen vom Nullpunkt 64 beziehungsweise 65 ein lineares konstantes Teil 66 beziehungsweise 67 auf, das bis zu einem Knickpunkt 68 beziehungsweise 69 geht. In diesem Bereich werden das Gasmagnetventil 6 beziehungsweise der Motor der Lösungsmittelpumpe 23 getaktet in einem variierenden Pulspausenverhältnis betrieben. Vom Knickpunkt 68 reicht die Kurve XX als Gerade bis zum Maximalpunkt 70, während die Kurve XIX eine Krümmung entsprechend einer Parabel aufweist. Der Maximalpunkt 71 der Kurve XIX ist zusammen mit dem Punkt 70 in der Abszisse der Maximalleistung der Wärmepumpe, hier 20 kW, entsprechend der tiefsten Temperatur der Klimazone, hier −15° C, entsprechend der maximalen Vorlauftemperatur, hier 39° C, entsprechende dem maximalen Drucksollwert im Hochdruckteil der Wärmepumpe, hier 17,5 bar, zugeordnet. Die zugehörigen Ordinatenwerte ergeben sich aufgrund des maximalen Gasdurchsatzes, der zur geforderten Leistung von 20 kW gehört beziehungsweise zum maximalen Lösungsmitteldurchsatz, um diese Leistung zu erzielen. Somit ergeben sich, wenn beispielsweise aufgrund der gerade herrschenden Aussentemperatur eine Vorlauftemperatur von 35° C notwendig ist, die Punkte 72 und 73 auf den Kurven XIX und XX. Eine Übertragung beider Punkte auf die zugehörigen Ordinatenwerte ergibt, dass ein Lösungsmitteldurchsatz von 135 kg/h notwendig ist. Diesem Solldurchsatz lässt sich eine bestimmte Pumpendrehzahl zuordnen. Weiterhin ergibt der Punkt 73, dass zur Erzielung der Augenblicksleistung von 15,8 kW und zur Aufrechterhaltung des Kondensatordrucks von 15,8 bar ein Gasdrchsatz von 2,25 m³/h notwendig ist. Demgemäss lauten die Stellgrössen des Reglers auf den Gasdurchsatz beziehungsweise auf eine entsprechende Spannung für den Antriebsmotor 23 der Pumpe 22, um die entsprechende Drehzahl der Lösungsmittelpumpe zu erreichen, woraus bei festliegender dem Fördervolumen pro Umdrehung ein bestimmter Durchsatz folgt. Es ist natürlich möglich, die Angaben für Lösungsmitteldurchsatz und Gasdurchsatz auch für andere Klimazonen, andere Endleistungen beziehungsweise andere Heizsysteme zu erstellen.

Die Kurve XIX, die den Brennstoffdurchsatz durch das Gasmagnetventil in Abhängigkeit von der Aussentemperatur darstellt, wächst parabelförmig mit fallender Aussentemperatur an. Hierbei hat es sich als in den Rahmen des ersten unabhängigen Anspruches fallend und in selbstständig erfinderisch ausgestaltender Weise herausgestellt, den laufenden Gasdurchsatz, ausgehend von einem Minimumgasdurchsatz, nach folgender Beziehung ablaufen zu lassen:

$$\dot{V}_{RV} = \dot{V}_{RVmin} + A(N - N_{min})(1 + (\xi\dot{V}_{RVmin} - \xi\dot{V}_{RV}))$$

Hierin bedeuten $\dot{V}_{RV}$ in m³/h den Gasdurchsatz, den man der Wärmepumpe zuführt als Funktion der gewünschten Leistung, die proportional der Aussentemperatur oder der Vorlauftemperatur oder dem Druck im Hochdruckteil der Anlage ist, wie auf der Abszisse der Abb. 6 dargestellt ist. Dieser Gasdurchsatz ist gleich dem Ausgangsgasdurchsatz $\dot{V}_{RVmin}$, Abb. 6, Punkt 69. Dieser Gasdurchsatz darf nicht unterschritten werden, da ein Brenner nicht kontinuierlich von Höchstlast bis auf Nulldurchsatz regelbar ist. Der Gasdurchsatz ist dann in erster Näherung zunächst eine linear abhängige Funktion der Leistung, ausgedrückt durch den Term $A \times (N - N_{min})$. A ist dabei eine Konstante mit der Dimension Gasdurchsatz in m³/h dividiert durch Leistung in kW. Diese Konstante ist dimensionierungsabhängig und hat in unserem Beispiel etwa den Wert ½. N ist dabei die laufende Leistung in kW, und $N_{min}$ ist die Leistung bei dem Punkt, ab dem der Brenner nicht mehr kontinuierlich geregelt wird, in unserem Beispiel etwa bei 4,5 kW. Diese lineare Beziehung wird nun von $N_{min}$ bis $N_{max}$ durch den Korrekturterm $\xi\dot{V}_{RVmin} - \xi\dot{V}_{RV}$ ergänzt. Hierin bedeuten $\xi\dot{V}_{RVmin}$ das Wärmeverhältnis bei der entsprechenden Leistung $N_{min}$ entsprechend der Aussentemperatur entsprechend dem kleinsten einstellbaren Gasdurchsatz und $\xi\dot{V}_{RV}$ alle Wärmeverhältnisse von $N_{min}$ bis $N_{max}$ entsprechend der Aussentemperatur bei $N_{min}$ bis zur maximalen Auslegungstemperatur entsprechend der Temperatur bei $N_{min}$ dem Druck im Hochdruckteil bei $N_{min}$. Durch diese Korrektur wird berücksichtigt, dass gerade wegen des schlechteren Wärmeverhältnisses bei konstanter Lösungsmengenzufuhr mehr Energie über den Gasdurchsatz zugeführt werden muss. Das liegt eben daran, dass beim Austreibungsvorgang bei höheren Drücken im Hochdruckteil und höheren Kondensationstemperaturen entsprechend mehr Leistung zugeführt werden muss, um im Verhältnis die gleiche Kältemitteldampfmenge wie bei tieferen Temperaturen und tieferen Drücken im Hochdruckteil austreiben zu können.

## Patentansprüche

1. Verfahren zum Ermitteln des Sollwertes eines Druck- und Temperaturreglers für den Hochdruckteil einer Sorptionswärmepumpe, wobei der Regler einen Druck-/Temperaturfühler als Messwertgeber und ein Brennstoffventil beziehungsweise eine Lösungsmittelpumpe als Stellglieder aufweist, dadurch gekennzeichnet, dass die maximal an einen Verbraucher (27) abgebbare Leistung der Sorptionswärmepumpe der tiefsten in einer Klimazone auftretenden Aussentemperatur ($t_a$) als Voreinstellung zugeordnet wird, dass anschliessend in einer linear proportionalen Kennlinie (I, II, III) die jeweilige Solleistung zwischen der Maximalleistung und Null linear proportional als Funktion der gemessenen Aussentemperatur vorgegeben und dass der hieraus resultierende Referenzwert in einen Druck-/Temperatursollwert für den Regler (10) umgesetzt wird.

2. Verfahren nach Anspruch 1, dadurch gekennzeichnet, dass den Druck-/Temperatursollwerten bestimmte Werte für Brennstoff- und Lösungsmitteldurchsätze zugeordnet sind.

3. Verfahren nach einem der beiden Ansprüche 1 oder 2, dadurch gekennzeichnet, dass die maximale Leistung der Sorptionswärmepumpe der Umschalttemperatur bei bivalentem Betrieb zugeordnet ist.

4. Verfahren zum Ermitteln des Sollwertes eines Temperatur- oder Druckreglers einer Sorptionswärmepumpe, insbesondere einer Absorptionswärmepumpe, gekennzeichnet durch folgende Schritte:

1) Die maximale Leistung der Wärmepumpe wird der tiefsten am Aufstellungsort der Wärmepumpe zu erwartenden Temperatur zugeordnet.

2) Die minimale Leistung der Wärmepumpe wird einer maximalen Aussentemperatur zugeordnet, bis zu der eine Heizung stattfinden soll.

3) Den möglichen als Verbraucher für die Wärmepumpe dienenden Heizungssystemen werden Kurven zugeordnet, deren einer Punkt der minimalen Vorlauftemperatur des Systems und deren jeweiliger anderer Punkt der in der Klimazone zu erwartenden Minimaltemperatur entsprechenden maximalen Vorlauftemperatur entspricht.

4) Die Vorlauftemperatur des Heizungssystems wird in eine Zuordnung zu bestimmten Druck- und Temperaturwerten im Hochdruckteil der Wärmepumpe gebracht.

5) Die Werte für den Lösungsmittel- und den Brennstoffdurchsatz werden gemeinsam den Druck-/Temperatursollwerten im Hochdruckteil der Wärmepumpe zugeordnet, und zwar

6) 100% Lösungsmitteldurchsatz werden der maximalen Leistung, der Minimaldurchsatz (bei dessen Unterschreiten der Wärmepumpenbetrieb vom kontinuierlichen in einen Pulspausenbetrieb übergeht) 10% der maximalen Wärmepumpenleistung, und

7) 100% Brennstoffdurchsatz werden der maximalen Wärmepumpenleistung, der minimale Brennstoffdurchsatz 10% der Wärmepumpenleistung zugeordnet, wobei diese Verbindung zwischen dem minimalen und dem maximalen Brennstoffdurchsatz der Beziehung

$$\dot{V}_{RV} = \dot{V}_{RVmin} + A(N - N_{min})(1 + (\xi\dot{V}_{RVmin} - \xi\dot{V}_{RV}))$$

zugeordnet ist, wobei $\dot{V}_{VR}$ den Gasdurchsatz in m³/h, $\dot{V}_{RVmin}$ den minimalen Gasdurchsatz in m³/h, A eine Konstante mit der Dimension m³/h·kW, N die laufende Leistung in kW, $N_{min}$ die minimale Leistung, $\xi\dot{V}_{RV}$ das Wärmeverhältnis von $N_{min}$ bis $N_{max}$ und $\xi\dot{V}_{RVmin}$ das Wärmeverhältnis bei der Leistung $N_{min}$ ist.

## Claims

1. A method of determining the desired value for a pressure/temperature controller for the high-pressure part of a sorption heat pump, which controller comprises a pressure/temperature sensor for generating a measured value signal and a fuel valve and/or a solvent pump as a final control element, characterized in that the maximum power which the sorption heat pump is adapted to deliver to a consumer (27) is preset in association with the lowest outdoor temperature ($t_a$) to be expected in a climatic zone, that the desired power between the maximum power and zero is predetermined in a linear proportional characteristic curve (I, II, III) in linear proportion as a function of the measured outdoor temperature, and that the resulting reference value is converted to a desired pressure/temperature value for the controller (10).

2. A method according to Claim 1, characterized in that certain values for fuel solvent throughputs are associated with the desired pressure/temperature values.

3. A method according to Claim 1 or 2, characterized in that the maximum power of the sorption heat pump is associated with the changeover temperature for bivalent operation.

4. A method of determining the desired value for a temperature or pressure controller of a sorption heat pump particularly an absorption heat pump, characterized by the following steps:

1) The maximum power of the heat pump is associated with the lowest temperature to be expected at the location of the heat pump.

2) The minimum power of the heat pump is associated with a maximum outdoor temperature up to which heating is desired.

3) The heating systems which may be used as consumers in conjunction with the heat pump have curves associated with them which have one point corresponding to the minimum flow main temperature of the system and another point corresponding to the maximum flow main temperature which corresponds to the minimum temperature to be expected in the climatic zone.

4) The flow main temperature of the heating system is associated with predetermined pressure and temperature values in the high-pressure part of the heat pump.

5) The value for the solvent and fuel throughout are jointly associated with the desired pressure and temperature values in the high-pressure part of the heat pump in such a manner that

6) a solvent throughput of 100% is associated with the maximum power, the minimum throughput (below which the heat pump operation is changed from a continuous operation to an intermittent operation) is associated with 10% of the maximum heat pump power, and

7) a fuel throughput of 100% is associated with the maximum heat pump power and the minimum fuel throughput is associated with 10% of the heat pump power, and that relation between the minimum and maximum fuel throughput corresponds to the relation

$$\dot{V}_{RV}=\dot{V}_{RVmin}+A(N-N_{min})\ (1+(\xi\dot{V}_{RVmin}-\xi\dot{V}_{RV})$$

wherein $\dot{V}_{RV}$ is the gas throughput in m³/h, $\dot{V}_{RVmin}$ is the minimum gas throughput in m³/h, A is a constant having the unit m³/h·kW, N is the current power in kW, $N_{min}$ is the minimum power, $\xi\dot{V}_{RV}$ is the heat ratio from $N_{min}$ to $N_{max}$ and $\xi\dot{V}_{RVmin}$ is the heat ratio at the power $N_{min}$.

## Revendications

1. Procédé pour la détermination de la consigne d'un régulateur de pression/température pour la partie hp d'une thermopompe à sorption, le régulateur présentant une sonde manométrique/thermométrique comme capteur de mesure et une soupape de combustible ou une pompe de circulation de solvant comme organes de réglage, caractérisé par le fait que la puissance maximale que peut fournir la thermopompe à sorption à un récepteur (27) est adaptée comme valeur de préréglage à la température extérieure minimale ($t_a$) dans une zone climatique que, ensuite, par une caractéristique linéairement proportinnelle (I, II, III), la puissance prescrite entre le maximum et zéro est déterminée comme fonction linéaire de la température extérieure mesurée, et que la valeur de référence qui en résulte est convertie en une consigne de pression/température pour le régulateur (10).

2. Procédé suivant la revendication 1, caractérisé par le fait qu'aux consignes de pression/température correspondent des débits de combustible et de solvant déterminés.

3. Procédé suivant l'une des revendications 1 ou 2, caractérisé par le fait que la puissance maximale de la thermopompe correspond à la température de commutation en cas de service bivalent.

4. Procédé pour la détermination de la consigne d'un régulateur de température ou de pression d'une thermopompe à sorption, notamment à absorption, caractérisé par les opérations suivantes:

1) La puissance maximale de la thermopompe est adaptée à la température minimale escomptée au lieu d'intallation de la thermopompe.

2) La puissance minimale de la thermopompe est déterminée en fonction de la température extérieure maximale à partir de laquelle il ne faut plus de chauffage.

3) Aux différents systèmes de chauffage faisant fonction de récepteurs pour la thermopompe sont attribuées des courbes dont l'un des points marque la température d'alimentation minimale du système, et l'autre la température d'alimentation maximale en fonction de la température minimale attendue dans la zone climatique.

4) La température d'alimentation du système de chauffage est mise en relation avec des pressions et températures déterminées régnant dans la partie hp de la thermopompe.

5) Les débits de solvant et de combustible sont en commun mis en relation avec les consignes de pression/température relatives à la partie hp de la thermopompe, à savoir

6) un débit de solvant de 100% correspond à la puissance maximale, le débit minimal (qui, au-dessous d'une valeur limite, provoque un fonctionnement intermittent et non plus continu de la thermopompe) à 10% de la puissance maximale de la thermopompe, et

7) un débit de combustible de 100% correspond à la puissance maximale de la thermopompe, le débit minimal à 10% de la puissance de la thermopompe, cette relation entre les débits minimal et maximal de combustible étant caracté-risé par la relation

$$\dot{V}_{RV} = \dot{V}_{RVmin} + A(N - N_{min}) \; (1 + (\xi \dot{V}_{RVmin} - \xi \dot{V}_{RV})$$

où $\dot{V}_{RV}$ représente le débit de gaz en $m^3/h$, $\dot{V}_{RVmin}$, le débit de gaz minimal en $m^3/h$, A, une constante équivalant à $m^3/h \cdot kW$, N, la puissance courante en kW, $N_{min}$, la puissance minimale, $\xi \dot{V}_{RV}$, le rapport thermique entre $N_{min}$ et $N_{max}$, et $\xi \dot{V}_{RVmin}$, le rapport thermique à la puissance $N_{min}$.

Fig. 1

Fig. 2

0 073 797

Fig. 3

Fig. 4

# Fig. 5

Fig. 6